Europäisches Patentamt

European Patent Office

Office européen des brevets

(19)

(11) Veröffentlichungsnummer: **0 081 039**
**B1**

(12) **EUROPÄISCHE PATENTSCHRIFT**

(45) Veröffentlichungstag der Patentschrift:
08.05.85

(51) Int. Cl.⁴: **C 05 C 7/00**

(21) Anmeldenummer: 82108061.1

(22) Anmeldetag: 01.09.82

(54) Stabilisierte Düngerlösungen.

(30) Priorität: 03.12.81 DE 3147821

(43) Veröffentlichungstag der Anmeldung:
15.06.83 Patentblatt 83/24

(45) Bekanntmachung des Hinweises auf die Patenterteilung:
08.05.85 Patentblatt 85/19

(84) Benannte Vertragsstaaten:
AT BE DE FR GB IT NL SE

(56) Entgegenhaltungen:
DD - A - 145 370
DE - A - 2 051 935
DE - A - 2 702 284
DE - A - 2 707 639
FR - A - 1 232 366
FR - A - 2 385 660

(73) Patentinhaber: SKW Trostberg Aktiengesellschaft,
Dr.-Albert-Frank-Strasse 32 Postfach 1150/1160,
D-8223 Trostberg (DE)

(72) Erfinder: Michaud, Horst, Dr., Sonnenleite 11,
D-8223 Trostberg (DE)
Erfinder: Raveling, Hermann, Dr., Ginzing 5,
D-8226 Altenmarkt (DE)
Erfinder: Seeholzer, Josef, Dr., Eichenstrasse 3,
D-8223 Trostberg (DE)

(74) Vertreter: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)

## Beschreibung

Die Erfindung betrifft stabilisierte Düngerlösungen, in denen das Auskristallisieren von Dicyandiamid verhindert wird.

Ein wirksamer Nitrifikationshemmstoff in Stickstoffdüngern ist z. B. Dicyandiamid. Besonders interessant ist sein Einsatz in Flüssigdüngern. Eine hohe Wirksamkeit der Nitrifikationshemmer wird erzielt, wenn die Dicyandiamid-N-Menge etwa 10% der Gesamt-Stickstoffmenge im Dünger ausmacht. Bei Stickstoffdüngern auf Basis Ammonnitrat-Harnstoff ist diese Menge bei Temperaturen um 20°C noch löslich. Beim Abkühlen der Lösungen auf Temperaturen von 10°C und darunter wird aber die Löslichkeitsgrenze von Dicyandiamid unterschritten und es scheiden sich bereits nach kurzer Zeit Dicyandiamidkristalle aus, die schnell zu einer Kristallgröße von 1 mm und darüber wachsen. Damit verarmen die Lösungen an Dicyandiamid. Da diese Lösungen durch Verspritzen oder Versprühen ausgebracht werden, ergeben sich durch großkristalline Dicyandiamidausscheidungen erhebliche Schwierigkeiten, weil Leitungen, Siebe und Düsen schnell verstopfen. Solche Stickstoff-Düngerlösungen werden bevorzugt im zeitigen Frühjahr ausgebracht, während dem in den nördlichen Breiten noch sehr niedrige Außentemperaturen herrschen. Hierbei kommt es zu den vorgenannten Schwierigkeiten, insbesondere dann, wenn die Lösungen über den Winter gelagert wurden.

Es bestand daher die Aufgabe, stabile Düngerlösungen zu schaffen, in welchen die Kristallisation von Dicyandiamid beim Lagern oder Abkühlen über längere Zeit verhindert wird.

Gelöst wurde diese Aufgabe durch Düngerlösungen mit einem Gehalt an wasserlöslichen Polymeren, die in geringen Mengen eine Kristallisation des Dicyandiamids und/oder anderer Bestandteile der Düngerlösung wirksam verzögern.

Polymere, welche solche kristallisationsverzögernden Eigenschaften für Dicyandiamid besitzen, gehören z. B. zur Klasse der Polyaldehydcarbonsäuren. Geeignete Typen besitzen als 50%ige wäßrige Lösung eine Viskosität von 400 m Pas bei 20°C und ein durchschnittliches Molekulargewicht von 1500. Besonders bevorzugt werden Polymere des Vinylalkohols bestimmten Viskositäts- und Hydrolysegrades verwendet, wie z. B. Polyviol W- oder Moviol LP-Typen einer Viskosität von 5—50 m Pas (gemessen in einer 4%igen wäßrigen Lösung bei 20°C) und einem Hydrolysegrad von 70 bis >99 Mol-%. Ähnliche Eigenschaften besitzen auch die aus Naturprodukten gewonnenen Polymannosen, Galaktomannane sowie Celluloseäther und bestimmte modifizierte Stärketypen.

Diese Stoffe stehen in ausreichender Menge preisgünstig zur Verfügung. Sie sind physiologisch völlig unbedenklich, da sie u. a. auch in der Nahrungsmittelindustrie Verwendung finden.

Für das Einbringen in Düngerlösungen ist es zweckmäßig, die Polymere bereits in gelöster Form z. B. als Lösung bestimmten Gehaltes einzubringen. Die Herstellung solcher Lösungen erfolgt einfach durch Einrühren des Pulvers in Wasser und mäßiges Erwärmen. Das Vermischen der Polymer-Lösungen mit der Düngerlösung erfolgt auf einfache Weise durch Umrühren.

Gemische von Polymeren sind nicht ausgeschlossen.

Die Polymeren verzögern die Kristallisation des Dicyandiamids wirksam, ohne dabei praktisch die Viskosität der Düngerlösungen zu verändern.

Die aufzuwendende Menge an Polymer hängt von dessen chem. Struktur ab. Im allgemeinen sind jedoch 0,005 bis 0,5 Gew.-% in der Düngerlösung ausreichend. Bevorzugt werden 0,02 bis 0,3 Gew.-% verwendet. Diese Polymergehalte verhindern wirksam ein Auskristallisieren des Dicyandiamids aus den Düngerlösungen, selbst wenn die Lösung durch absinkende Temperatur an Dicyandiamid übersättigt ist. Auf diese Weise gelingt es, den Dicyandiamidgehalt in der Lösung konstant zu halten und Schwierigkeiten beim Ausbringen der Lösungen zu vermeiden.

Die nachstehenden Beispiele sollen die Erfindung weiter erläutern, ohne sie jedoch darauf zu beschränken.

### Beispiel 1

In eine Düngerlösung bestehend aus 39,5 Gew.-% Ammonnitrat, 30,5 Gew.-% Harnstoff, 4,3 Gew.-% Dicyandiamid (entsprechend 10 Gew.-% Dicyandiamid-N berechnet auf Gesamt-N der Lösung) und 25,7 Gew.-% Wasser wurden die nachfolgend angegebenen Polymerlösungen bei 20°C eingerührt. Die Lösungen wurden auf 6°C abgekühlt und bei dieser Temperatur gelagert. Es wurden die Tage Lagerzeit registriert, an denen die erste Kristallisation von Dicyandiamid festgestellt wurde.

Tabelle 1

| Kristallisationsverzögerndes Mittel | Zusatzmenge an wasserfreiem Polymer (Gew.-%) | Kristallisationsbeginn (nach Tagen) bei 6° C |
|---|---|---|
| ohne | 0 | 2 |
| Polyaldehydcarbonsäure, 50%ige Lösung (POC HS 2020 v. Degussa) | 0,1 | 26 |
| Polyvinylalkohol, 20%ig (Polyviol W 25/190 v. Wacker) | 0,1 0,02 | >90 >90 |
| Polyvinylalkohol, 20%ig (Polyviol W 48/20 v. Wacker) | 0,1 0,02 | 12 11 |

Beispiel 2

In einer Stickstoff-Düngerlösung bestehend aus 39,5 Gew.-% Ammonnitrat, 30,5 Gew.-% Harnstoff und 30,0 Gew.-% Wasser wurde bei 20° C so viel dicyandiamid gelöst, daß der Dicyandiamid-N-Gehaltes der Düngerlösung betrug (auf 100 Gew.-Teile Düngerlösung 4,2 Gew.-Teile Dicyandiamid). Nach Zusatz der nachfolgend beschriebenen Polymerlösungen wurde die Lösung auf 0° C abgekühlt. Es wurde die Zeitdauer bis zur ersten Dicyandiamid-Kristallbildung beobachtet.

Tabelle 2

| Kristallisationsverzögerndes Mittel | Zusatzmenge an wasserfreiem Polymer (Gew.-%) | Kristallisationsbeginn (nach Tagen) bei 0° C |
|---|---|---|
| ohne | 0 | 1 |
| Polyaldehydcarbonsäure, 50%ig (gleiche Type wie in Beisp. 1) | 0,2 | 61 |
| Polyvinylalkohol, 30%ig (Moviol 3-83 von Hoechst) | 0,1 | 18 |
| Polyvinylalkohol, 20%ig (Moviol 40-88 von Hoechst) | 0,1 | 15 |
| Polyvinylalkohol, 30%ig (Moviol LP 10-74 von Hoechst) | 0,1 | 28 |
| Polyvinylalkohol, 30%ig (Moviol LP 15-79 von Hoechst) | 0,07 | 28 |

Beispiel 3

In einer dem Beispiel 2 analogen Stickstoff-Düngerlösung wurde bei 20°C so viel Dicyandiamid aufgelöst, daß der Dicyandiamid-N-Gehalt 9 Gew.-% des Gesamt-N-Gehalts der Düngerlösung betrug (auf 100 Gew.-Teile Düngerlösung 3,78 Gew.-Teile Dicyandiamid). Nach dem Vermischen mit dem nachfolgend angegebenen Polymerlösungen wird die Düngerlösung auf 0° C abgekühlt. Es wurde die erste Dicyandiamid-Kristallbildung beobachtet.

| Kristallisationsverzögerndes Mittel | Zusatzmenge an wasserfreiem Polymer (Gew.-%) | Kristallisations- beginn (nach Tagen) bei 0° C |
|---|---|---|
| ohne | 0 | 2 |
| Polyaldehydcarbonsäure, 50%ig (gleiche Type wie in Beisp. 1) | 0,1 | > 90 (noch keine Kristallisation) |
| Polymannose, 20%ig (Diagum A 8 von Diamalt) | 0,1 | 21 |
| Polymannose, 20%ig (Diagnar GH von Diamalt) | 0,1 | 19 |
| Polyvinylalkohol, 30%ig (Moviol LP 10-74) | 0,01 | > 90 (noch keine Kristalllisation) |
| Polyvinylalkohol, 30%ig (Moviol LP 15-79) | 0,1 | > 90 (noch keine Kristallisation) |

**Patentansprüche**

1. Stabilisierte Düngerlösungen, vor allem Stickstoff-Düngerlösungen, mit einem Gehalt an Dicyandiamid als Nitrifikationshemmstoff, dadurch gekennzeichnet, daß sie zur Verzögerung der Dicyandiamid-Kristallisation als Stabilisator wasserlösliche organische polymere Verbindungen enthalten.

2. Düngerlösung nach Anspruch 1, dadurch gekennzeichnet, daß die Polymeren Verbindungen in Form wäßriger Lösungen den Düngerlösungen zugesetzt werden.

3. Düngerlösungen nach den Ansprüchen 1 und 2, dadurch gekennzeichnet, daß sie als polymere Verbindung Polyvinylalkohol enthalten.

4. Düngerlösungen nach den Ansprüchen 1 und 2, dadurch gekennzeichnet, daß sie als polymere Verbindung Polyaldehydcarbonsäure enthalten.

5. Düngerlösungen nach den Ansprüchen 1 bis 4, mit einem Gehalt an Polymerverbindungen in einer Menge von 0,005—0,5 Gew.-%.

**Claims**

1. Stabilised fertiliser solutions, especially nitrogen fertiliser solutions, with a content of dicyandiamide as nitrification inhibitor, characterised in that, for the retarding of the dicyandiamide crystallisation, it contains water-soluble organic polymeric compounds as stabiliser.

2. Fertiliser solution according to claim 1, characterised in that the polymeric compounds are added to the fertiliser solutions in the form of aqueous solutions.

3. Fertiliser solutions according to claims 1 and 2, characterised in that they contain polyvinyl alcohol as polymeric compound.

4. Fertiliser solutions according to claims 1 and 2, characterised in that they contain polyaldehyde carboxylic acid as polymeric compound.

5. Fertiliser solutions according to claims 1 to 4 with a content of polymeric compounds in an amount of 0.005—0.5 wt.%

**Revendications**

1. Solutions d'engrais stabilisées, principalement solutions d'engrais azoté, contenant du dicyanodiamide en tant qu'inhibiteur de la nitrification, caractérisées en ce que, pour retarder la cristallisation du dicyanodiamide, elles contiennent en que stabilisants des composés polymères organiques hydrosolubles.

2. Solution d'engrais selon la revendication 1, caractérisée en ce que les composés polymères sont ajoutés à la solution d'engrais à l'état de solution aqueuse.

3. Solutions d'engrais selon les revendications 1 et 2, caractérisées en ce qu'elles contiennent en

4

tant que composé polymère de l'alcool polyvinylique.

4. Solutions d'engrais selon les revendications 1 et 2, caractérisées en ce qu'elles contiennent en tant que composé polymère un acide polyaldéhyde-carboxylique.

5.Solutions d'engrais selon les revendications 1 à 4, contenant les composés polymères en quantité de 0,005 à 0,5% en poids.